# NEUE EUROPÄISCHE PATENTSCHRIFT

(11) **EP 2 073 968 B2**
(45) Veröffentlichungstag und Bekanntmachung des Hinweises auf die Entscheidung über den Einspruch: **13.12.2017**
(45) Hinweis auf die Patenterteilung: 11.06.2014
(21) Anmeldenummer: 07802271.2
(22) Anmeldetag: 12.09.2007
(51) Int. Cl.: B29C 45/03

(54) **VERFAHREN UND SPRITZGIESSMASCHINE MIT MODULAREM AUFBAU**
METHOD AND INJECTION-MOULDING MACHINE WITH MODULAR STRUCTURE
PROCÉDÉ ET MACHINE DE MOULAGE PAR INJECTION À STRUCTURE MODULAIRE

(30) Priorität: 14.09.2006 CH 14862006
(43) Veröffentlichungstag der Anmeldung: 01.07.2009
(73) Patentinhaber: Netstal-Maschinen AG, 8752 Näfels (CH)
(72) Erfinder: WENZIN, Placi, 8890 Walenstadt (CH); JENNY, Daniel, 8868 Oberurnen (CH); WEINMANN, Robert, 8872 Weesen (CH)
(74) Vertreter: Wilhelm, Ludwig
(86) Internationale Anmeldenummer: PCT/EP2007/007928
(87) Internationale Veröffentlichungsnummer: WO 2008/031574

(56) Entgegenhaltungen:
- EP-A- 1 520 680
- DE-A1- 4 140 385
- DE-C1- 19 949 959
- GB-A- 623 546
- GB-A- 868 216
- JP-A- 6 344 371
- JP-A- 7 186 211
- JP-A- 10 296 794
- DIMMLER, G.; STEINBICHLER, G.; WOBBE, H.: "Neuer "High-Speed" für Dünnwandbauteile" KUNSTSTOFFE, September 2005 (2005-09), Seiten 112-117, XP002463172 München
- "Effizientes Spritzgiessmaschinen-Tuning" K-ONLINE, [Online] 30. August 2006 (2006-08-30), Seiten 1-2, XP002463173 Gefunden im Internet: URL:http://www.k-online.de/cgi-bin/md_k/cu stom/pub/content.cgi/Effizientes_Spritzgie _maschinen-Tuning.html?lang=1&oid=4740&tic ket=g_u_e_s_t&local_lang=1&print=1> [gefunden am 2007-12-19]
- "Make it max. Make it better." NETSTAL NEWS, [Online] Juni 2003 (2003-06), Seiten 1-15, XP002463174 Gefunden im Internet: URL:http://www.netstal.com/fileadmin/downl oads_de/Mediencenter/Drucksachen/Magazine/ News/NetstalNews_43.pdf> [gefunden am 2007-12-19]
- "Spritzgiessmaschine mit modularem Aufbau"[Online] 25. Juli 2007 (2007-07-25), XP002463175 Gefunden im Internet: URL:http://www.netstal.com/fileadmin/Medie ndatenbank/produkte/schutzrechte/SGM_modul arer_Aufbau.pdf> [gefunden am 2007-12-19]

## Beschreibung

### Technisches Gebiet

Die Erfindung betrifft ein Verfahren für Logistik, die Gestaltung sowie den Aufbau von Spritzgiessmaschinen auf Seiten des Maschinenherstellers, insbesondere für die Herstellung und den Transport von Spritzgiessmaschinen, ferner eine Spritzgiessmaschine mit zweiteiligem Aufbau mit einer Spritzaggregatseite.

### Stand der Technik

Bei Spritzgiessmaschinen haben sich zwei Konzepte weitgehend etabliert. Die Konzepte orientieren sich aus praktischen bzw. logistischen Gründen am Gesamtgewicht der Maschinen. Spritzgiessmaschinen bis zu etwa 400 Tonnen Schliesskraft haben ein Gewicht von weniger als 25 Tonnen. Sie werden einteilig hergestellt und können in grossen Containern vom Hersteller zu dem Betreiber der Maschinen über beliebige Distanzen einstückig bzw. ungeteilt verfrachtet werden. Für das ganze Handling stehen verschiedene Hilfsmittel zur Verfügung, wie Krane und Luftkissen, mit denen beispielsweise der Verlad problemlos erfolgt. In der Regel sind die Aussenabmessungen bei Maschinen unter 400 Tonnen Schliesskraft so, dass sie leicht auf Kraftfahrzeugen und Eisenbahnwagen transportierbar sind. Im Unterschied dazu werden grosse Spritzgiessmaschinen von wesentlich über 400 Tonnen Schliesskraft in der Regel zweiteilig transportiert und beim Kunden zusammengebaut.

Bei grossen Maschinen gibt es vielerlei Konzepte. Der Unterbau wird zum Teil einstückig, zum Teil zweigeteilt hergestellt und getrennt als Formschlussaufbau und als Spritzaggregataufbau transportiert. Bei den meisten Herstellern, welche den ganzen Bereich von kleineren, mittleren und grossen Maschinen anbieten, werden entsprechend angepasste Konzepte erstellt. Der Begriff Logistik schliesst teilweise das "Hardware"-Handling bzw. die Bearbeitung mit ein. Die Logistik umfasst aber ganz wesentlich die administrative Handhabung und betrifft die konzeptionelle Phase bei der Entwicklung einer Maschine: wann, wie und wo die Einzelteile hergestellt, gegebenenfalls auf Lager hergestellt, abgerufen und zusammengebaut werden. Aus dem gewählten Konzept ergibt sich, wie zuvor erklärt, die Art und Weise des Transportes der Maschine, ob dieser in Teilstücken oder als Einstückmaschine erfolgt. Ist ein Konzept für den Aufbau einer Spritzgiessmaschine festgelegt, ist in einem grossen Bereich sowohl das Handling wie auch die Logistik vorgegeben. Unter dem Begriff Handling wird der entsprechende englische Ausdruck, also alle Manipulationen, von der Herstellung der Maschinenteile bis zur Lieferung und das Aufstellen der Spritzgiessmaschine beim Kunden, verstanden. Bei der Herstellerfirma laufen meistens mehrere Aufbaukonzepte parallel. Entsprechend komplex wird das Handling und die Logistik, weil ganz einfach mehrere Konzepte nebeneinander im selben Betrieb bearbeitet werden müssen. Es ist ein wichtiger Aspekt, ob eine Maschine als Einzelstück konzipiert und beim Hersteller entsprechend montiert wird oder ob die Maschine beim Kunden zusammengebaut wird. In der Praxis trifft man beide Lösungen an, mit ihren jeweiligen Vor- und Nachteilen. Werden die Maschinen beim Kunden zusammengebaut, liefert der Hersteller Längsverbindungen als Montagehilfen mit, mit denen die Formschlussseite und die Spritzaggregatseite in Bezug auf die Längsausrichtung genau positioniert werden. Solche Längsverbindungen würden bei einstückigem Transport Manipulationen, wie beispielsweise Abheben mit einem Kran, Verschieben oder Abstellen auf unebenem Boden, nicht standhalten.

Ein weiterer nicht unwesentlicher Aspekt ist das Schutzverdeck für die ganze Maschine. Auch hier zeigt die Praxis eine grosse Vielfalt an Möglichkeiten. Jeder Maschinenhersteller verwendet mehrere, an das jeweilige Maschinenkonzept angepasste Ausgestaltungen.

Entsprechende Maschinen sind z.B. aus der DE 4 140 385, der EP 1 520 680, der JP 07 186 211 und der DE 199 49 959 C1 bekannt.

Aus den obigen Ausführungen ergibt sich, dass jeder Hersteller enorme Aufwendungen hat, von einem ersten Kundengespräch, der Konzeptionsstufe, Arbeitsvorbereitung, Vorfabrikation, bis zur Endmontage und Lieferung an den Kunden. Bei kritischer Betrachtung sind manche Aufwendungen unwirtschaftlich. Aus unternehmerischen Gründen ist das Beschränken auf nur einen Typ bzw. eine Normreihe eines einzigen Spritzgiessmaschinentyps riskant, da die Marktnachfrage, beispielsweise in Bezug auf Maschinen für die Preformherstellung, für die Optical-Disc-Herstellung oder die Herstellung von anderen Spritzgiessmaschinen, zum Beispiel für die Herstellung von Konsumgüterteilen oder Verpackungssteilen, starken Schwankungen unterworfen ist.

Der Erfindung wurde nun die Aufgabe gestellt, nach Lösungen zu suchen, welche sowohl die Herstellung wie auch die Logistik, vor allem in dem Bereich des Maschinenherstellers, auf eine höhere Wirtschaftlichkeitsstufe bringen, ohne dass daraus für den Kunden Nachteile entstehen.

### Darstellung der Erfindung

Die Formschlussseite wird zusammen mit einem Formschlussbett als Modul aus einer Formschlussbaureihe und als Spritzaggregat mit einem Tragelement aus einer Spritzaggregatbaureihe ausgewählt und über genormte bzw. einheitliche Maschinenbett-Kopplungsschnittstellen verbunden.

Die neue Erfindung zeigt überraschenderweise eine Vielzahl von Vorteilen, ohne störende Wirkung der Nachteile der Lösungen des Standes der Technik. Von den Erfindern ist erkannt worden, dass die Spritzgiessmaschinen des Standes der Technik, soweit diese bekannt sind, immer auf ein bestimmtes Ziel hin optimiert wurden. So hat die Anmelderin selber nur für einen bestimmten Maschinentyp eine baugruppenmässige Vorfabrikation, sei es im eigenen Werk oder durch dritte Herstellerfirmen, entwickelt. Für die Festlegung der Baugruppen musste zuvor die Art und Grösse jeder Baugruppe bestimmt werden. Der entscheidende Vorteil der neuen Erfindung liegt vor allem in den folgenden Punkten:
a) Für jedes Modul können eine oder mehrere Baugruppenreihen festgelegt werden.
b) Die einzelnen Module sind über einheitliche Montage- und Kopplungsschnittstellen verbindbar, derart, dass
c) kleine und mittelgrosse Maschinen im Herstellwerk zu Einstückmaschinen zusammengebaut und als solche transportiert werden können.

Durch eine Vereinheitlichung bzw. Normung der Schnittstellen können vorfabrizierte Module für jedes der entsprechend ausgebildeten Module aus Modulbaureihen ausgewählt und zu einer kundenspezifischen Maschine zusammengebaut werden. Damit aber wird für den Maschinenhersteller die ganze Logistik, vom ersten Kundengespräch bis zur Fabrikation der Maschine, der Auslieferung und der Montage beim Kunden, auf eine bisher nicht möglich gewesene Einfachheit reduziert. Ist einmal der Herstell- bzw. Verkaufspreis der einzelnen Module bekannt, können dem Kunden nicht nur mehrere Lösungen mit minimalstem Aufwand angeboten, sondern auch die Fabrikation beschleunigt werden. Da die grösstmögliche Anzahl an gleichen Einzelmodulen hergestellt werden kann, reduziert sich auch der Herstellpreis. Ein weiterer ganz entscheidender Vorteil der neuen Lösung erlaubt, dass jedes Modul bei einem anderen Hersteller gebaut und damit die entsprechenden Vorzüge jedes Herstellers genutzt werden können.
- Es kann eine minimale Teilezahl, sei es direkt oder über eine entsprechende Lagerbewirtschaftung, hergestellt werden.
- Es entstehen minimale Logistikaufwendungen.
- Die Durchlaufzeit in der Fabrikation kann durch Parallelmontagen verkürzt werden.
- Die Stückzahl kann bei der Fabrikation gesteigert werden dank der Vielfachverwendung identischer Lösungen.
- Die neue Erfindung erlaubt nicht nur, die gestellte Aufgabe optimal zu lösen, sondern gestattet auch beliebige Kombinationen im Hinblick auf:
   - elektrisch angetriebene Maschinen,
   - hydraulisch angetriebene Maschinen und
   - Hybridmaschinen, also die Kombination von elektrischen und hydraulischen Antrieben.
- Ein Kundenauftrag kann aus den entsprechenden Modulbaureihen schnell festgelegt und umgesetzt werden durch Auswahl:
   → der Formschliesskraftgrösse,
   → der Spritzaggregatgrösse,
   → sowie der Antriebsleistung.

Die neue Erfindung gestattet eine ganze Anzahl besonders vorteilhafter Ausgestaltungen. Dazu wird auf die Ansprüche 2 bis 8 sowie 10 bis 20 Bezug genommen. Gemäss einem vorteilhaften Lösungsweg werden zumindest kleinere und mittlere Maschinen nach der Endmontage einteilig gehandhabt, transportiert und beim Kunden entsprechend einteilig aufgestellt. Die weitere Handhabung der Maschine beim Kunden bzw. Spritzgiesser erfolgt als untrennbare Maschine. Bevorzugt wird die Formschlussseite zusammen mit einem Formschlussbett als erstes Modul aus einer Formschlussbaureihe und das Spritzaggregat mit Tragelement bzw. Tragrohr als zweites Modul aus einer Spritzaggregatbaureihe ausgewählt mit dem Ziel eines Zusammenbaus mittels einheitlicher Montage- und Kopplungsschnittstellen. Der Gedanke der Modulbauweise geht damit weit über die in der Praxis zum Teil angewendete Baugruppenbauweise hinaus. Die Baugruppen des Standes der Technik stellen letztlich nur eine Unterteilung eines einzelnen Maschinentyps in kleinere Einheiten dar. Die Modulbauweise betrachtet ganze Baureihen von verschiedenartigen und unterschiedlich grossen Maschinen, welche gleichsam wie Lego-Bausteine mit einheitlichen Montage- und Kopplungsschnittstellen zusammensetzbar sind. Der Aggregat-Unterbau wird als Antriebsmodul bzw. als drittes Modul ausgebildet und aus einer Antriebsmodulbaureihe ausgewählt. Das neue Konzept sieht damit drei Modulbaureihen vor, welche in beliebiger Auswahl zu einer ganzen Maschine bereits "auf dem Papier" und später in der Fabrikation zusammenfügbar sind. Dabei weist jede Modulbaureihe unterschiedlich grosse und verschiedenartige Module auf, sei es beispielsweise für die Optical-Disc-Herstellung, die Preformherstellung oder für Spritzgiessmaschinen allgemein zur Herstellung von Konsumgüterteilen oder Verpackungsteilen.

Gemäss einem weiteren Ausgestaltungsgedanken wird das Spritzaggregat mit einem Tragelement bzw. Tragrohr als zweites Modul ausgebildet, welches über eine genormte Montage- bzw. Kopplungsschnittstelle mit dem Antriebsmodul verbunden wird. Das Tragrohr wird fest mit dem Antriebsmodul verbunden, sodass das Spritzaggregat über entsprechende Antriebe relativ zu dem Tragrohr bewegbar ist. Eine weitere sehr vorteilhafte Ausgestaltung liegt darin, dass mit der Auswahl des Formschlussmoduls die Spritzachshöhe bestimmt wird, wobei das Spritzachsmodul mit Tragrohr mittels in der Höhe anpassbarer Montage- bzw. Kopplungsschnittstellen mit dem Antriebsmodul verbunden wird. Damit können für Maschinen in bisher nicht möglichen Arten und Grössen identische Baugruppen verwendet und zusammengefügt werden.

Besonders bevorzugt wird das Formschlussmodul mit der Spritzaggregatseite bzw. dem Antriebsmodul über genormte Montage- und Maschinenbett-Kopplungsstellen biegestabil verbunden, derart, dass eine ganze Maschine im montierten Zustand mit Hebezeug abgehoben und transportiert werden kann. Dies betrifft vor allem kleinere und mittlere Maschinengrössen bis in den Bereich von etwa 400 Tonnen Schliesskraft.

Vorteilhafterweise wird das Spritzaggregat über symmetrisch zur Einspritzachse angeordnete genormte Spritzaggregat-Schnittstellen direkt mit der düsenseitigen Formaufspannplatte mit dem Formschlussmodul verbunden, zur Übertragung der Anpresskraft über die Zugstangen.

Vorrichtungsgemäss weist die Spritzgiessmaschine bevorzugt
- ein Formschlussmodul,
- ein Spritzaggregatmodul bzw. Aggregatmodul sowie
- ein Antriebsmodul auf.

Diese drei Module können nun aufgrund eines gegebenen Standardprogramms oder eines Anforderungskataloges eines Kunden ausgewählt, zusammengestellt und, wie zuvor ausgeführt, hergestellt werden. Sehr wichtig ist dabei, dass alle Montage- und Kopplungsschnittstellen als genormte Schnittstellen ausgebildet werden.

Im bzw. am Antriebsmodul werden insbesondere Ölspeicher, Pumpenantrieb, ferner Kühler und Filter und am Antriebsmodul ein Schaltschrank angeordnet. Im Unterschied zu dem Formschliessbett sind in dem Antriebsmodul mehrere Komponenten für verschiedene Funktionen untergebracht. Insbesondere sind dies Komponenten im Zusammenhang mit dem Hauptantrieb im Falle einer hydraulischen Maschine. Das Spritzaggregat wird für den Produktionsbetrieb von Kunststoffteilen über Zugstangen, welche als genormte Einspritzschnecken-Schnittstellen ausgebildet sind, direkt mit der düsenseitigen Formaufspannplatte mit dem Formschlussmodul verbunden. Die Zugstangen haben dabei eine reine Zugfunktion und sollen nicht mit anderen Kräften, welche sich aus dem Handling der ganzen Maschine ergeben, belastet werden. Das Formschlussmodul wird im oberen Bereich mit dem Spritzaggregatmodul über die Zugstangen-Schnittstelle verbunden. Damit sollen primär die Kräfte aus dem Formschluss sowie dem Schmelzedruck in den Formwerkzeugen abgefangen werden. Diese wirken zur Hauptsache in Maschinenlängsrichtung.

Ganz besonders bevorzugt wird das Formschlussbett und der Spritzaggregatunterbau bzw. das Antriebsmodul über untere und obere Kopplungsschnittstellen zu einem biegestabilen Unterbau verbunden, derart, dass die Formschlussseite und die Spritzaggregatseite im montierten Zustand ein geschlossenes Kräfteparallelogramm bilden. Ueber das Kräfteparallelogramm, insbesondere die genormten Kopplungsschnittstellen, werden die Kräfte aufgenommen, welche beim Handling und während dem Transport, beispielsweise durch das Heben mit einem Kran oder bei ungleichmässiger Auflage auf den Transportgebinden, entstehen. Wichtig ist dabei, dass das Maschinenbett für die Spritzgiessmaschine, bestehend aus dem Formschlussbett und dem Spritzaggregatunterbau, zweiteilig ausgebildet ist, jedoch im Falle eines Transportes der ganzen Maschine als Einheit mit den mechanischen Aufbauten verbunden bleiben kann. Das Formschlussmodul kann, abgesehen von den elektrischen und hydraulischen Leitungen, unabhängig der Spritzaggregatseite vormontiert werden.

Das Spritzaggregat wird vorzugsweise mit einem Tragrohr als Spritzaggregatmodul ausgebildet, wobei das Spritzaggregat bzw. das Tragrohr über eine Montage- bzw. Kopplungsschnittstelle mit dem Spritzaggregatunterbau verbindbar ist.

Gemäss einer weiteren vorteilhaften Ausgestaltung weisen die einzelnen Module unabhängige genormte Schutzverdecke auf:
- ein Formschlussverdeck,
- ein Formschlussbettverdeck,
- ein Spritzaggregatverdeck,
- ein Spritzaggregatunterbauverdeck.

Dadurch wird auch das Schutzverdeck für die ganze Maschine gemäss dem Baukastenkonzept ausgebildet, und es kann aus Normteilen ausgewählt werden. Die einzelnen Schutzverdecke können ebenfalls über genormte Kopplungsschnittstellen schnell an die jeweiligen Module montiert oder auf dem Boden abgestützt bzw. angeschraubt werden.

Da die neue Erfindung nicht nur die Einzelherstellung von Modulen betrifft, sondern auch den Logistikbereich, das Handling und den Transport umfasst, ist es möglich, auf dem selben Grundkonzept aufbauend, Spritzgiessmaschinen grösser als 400 t Schliesskraft zwei- oder mehrstückig zu transportieren. Auch für die grossen Maschinen kann, wie weiter oben ausgeführt, die Mehrzahl der Vorteile der Erfindung, vom ersten Kundengespräch, der Lagerbewirtschaftung, der Modulherstellung und der Erstmontage im Werk des Herstellers, genutzt werden. Des weiteren ist es möglich, dass der Zusammenbau der Komponenten der Spritzaggregatmaschinen, wesentlich grösser als 400 t Schliesskraft, am Produktionsstandort beim Kunden erfolgt, vorzugsweise mit reduzierter Anzahl Schraubstellen des Formschlussbettes mit dem Antriebsmodul. Zwischen der Formschlussseite sowie der Spritzaggregatseite können elektrische, elektronische und hydraulische Kopplungsschnittstellen vorgesehen werden.

Gemäss einem weiteren Ausgestaltungsgedanken wird die Spritzaggregathöhe im Rahmen einer Formschluss-Normreihe festgelegt, wobei Höhendifferenzen in Bezug auf das Spritzaggregatmodul sowie das Antriebsmodul durch Distanzstücke zwischen dem Spritzaggregatmodul und dem Antriebsmodul ausgeglichen werden.

### Kurze Beschreibung der Erfindung

Die Erfindung wird nun anhand einiger Ausführungsbeispiele mit weiteren Einzelheiten erläutert. Es zeigen:
- die Figur 1: eine ganze Spritzgiessmaschine mit der Formschlussseite und der Spritzaggregatseite, über die Axe Y - Y trenn- bzw. zusammenmontierbar;
- die Figur 2: eine Schnittzeichnung mit den Montage- und Kopplungsschnittstellen zwischen dem Formschlussbett sowie dem Aggregatunterbau;
- die Figuren 3a bis 3e: fünf unterschiedliche Spritzgiessmaschinen mit Modulen aus drei Modulbaureihen;
- die Figur 4: die Formschlussseite, konzipiert als Formschlussmodul mit Formschlussbett;
- die Figur 5: die spritzdüsenseitige Formaufspannplatte mit genormten Zugstangenschnittstellen bzw. entsprechenden Kopplungsschnittstellen für das Spritzaggregat;
- die Figur 6: ein vollständiges Spritzaggregatmodul mit einem Tragelement bzw. Tragrohr;
- die Figur 7: die Kopplungsschnittstellen zwischen dem Tragrohr als Spritzaggregatmodul und dem Aggregatunterbau mit Distanzstücken für den Ausgleich von Höhendifferenzen;
- die Figur 8: ein Beispiel eines Antriebsmoduls, beidseits mit Bauraum für ölspeicher; den Hauptmotor mit Hydraulikpumpe und Öltank;
- die Figur 9: die Schutzverdecke in dem Bereich des Aggregatunterbaus;
- die Figur 10: eine Spritzgiessmaschine, mit der Formschlussseite sowie dem Spritzaggregat ohne Schutzverdeck dargestellt, und dem Aggregatunterbau mit montiertem Schutzverdeck und im Hintergrund den Schaltschrank.

### Wege und Ausführung der Erfindung

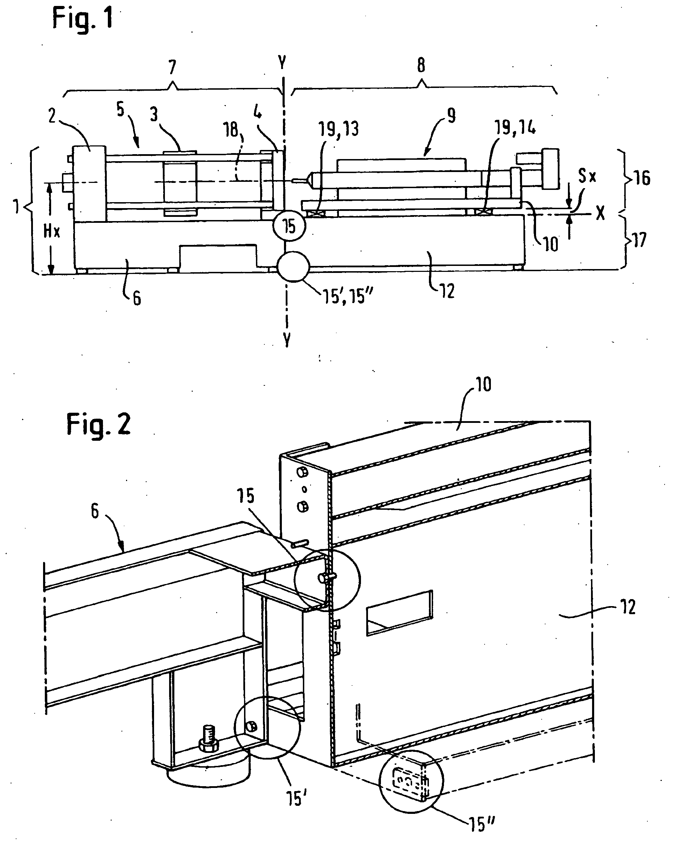

In der Folge wird auf die Figuren 1 und 2 Bezug genommen. Die Figur 1 zeigt die Haupttrennebene Y - Y zwischen der Formschlussseite 7 sowie der Spritzaggregatseite 8, ferner die Trennebene X zwischen dem Spritzaggregatmodul 16 sowie dem Antriebsmodul 17. Mit der Bestimmung des Formschlussmoduls 1 ist die exakte Höhenlage Hx bestimmt, welche einerseits die Wirkrichtung der Formschliesskraft und andererseits die entsprechende Höhenlage für die Spritzaxe 18 bestimmt. Weil der Aggregatunterbau 12 und das Spritzaggregat 9 selber genormte Höhendimensionen haben, werden Höhendifferenzen Sx durch Distanzstücke 19 ausgeglichen.

Die Figur 2 zeigt die Hauptschnittstellen 15. 15' 15" zwischen der Formschlussseite 7 sowie der Spritzaggregatseite 8 bzw. zwischen dem Formschlussbett 6 und dem Aggregatunterbau 12. Die massiven Kopplungsschnittstellen 15, 15' und 15" der beiden Maschinenbetthälften erlauben den Transport der Maschine als eine Einheit. Die Kopplungsschnittstelle 15 ist im oberen, mittleren Bereich der Maschinenbetten angeordnet. Die beiden Kopplungsschnittstellen 15', 15" befinden sich seitlich unten. Zusammen ergeben sie eine 3-Eck-Verbindung und damit eine biegestabile Verbindung für die ganze Maschine.

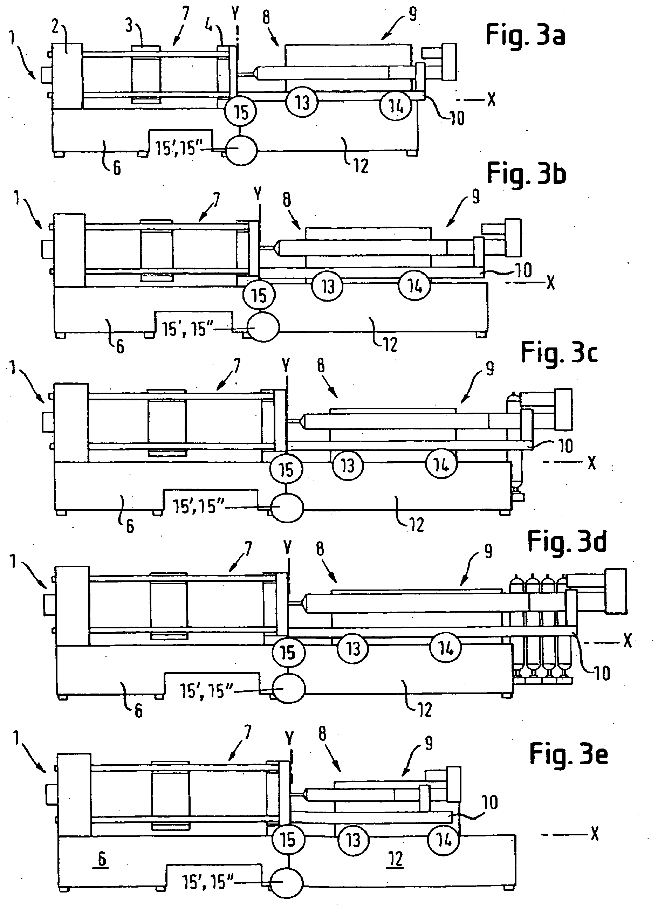

Die Figuren 3a bis 3e zeigen fünf Beispiele von Spritzgiessmaschinen, konzipiert nach der neuen Erfindung. Mit X - X und Y sind die Begrenzungsebenen der Hauptmodule angedeutet. Auf der linken Figurenseite ist ein Formschlussmodul 1 mit den Hauptelementen einer festen Trägerplatte 2 und einer beweglichen Formaufspannplatte 3 sowie einer düsenseitigen Formaufspannplatte 4 gezeigt. Nicht dargestellt ist der Formschliessmechanismus 5. Unterhalb der Platten 2, 3 und 4 befindet sich ein Formschlussbett 6. Auf der rechten Bildhälfte der Figur 3a befindet sich das Spritzaggregat 9, welches zusammen mit einem Tragrohr 10 das Spritzaggregatmodul 16 bildet. Unterhalb des Spritzaggregatmoduls 16 ist der Spritzaggregatunterbau 12. Das Spritzaggregatmodul 16 ist über Montage- und Kopplungsschnittstellen 13 und 14 verbunden. Mit den Bezugszeichen sind die Montage- und Kopplungsschnittstellen 15, 15' und 15" zwischen Formschlussbett und Antriebsmodul angedeutet. Alle Maschinenbetten sind grundsätzlich zweigeteilt. Transportmasse und Gewicht entscheiden, ob die Verbindung einmalig beim Bau vollzogen und die Maschine als Einheit transportiert wird oder ob die Maschine zweigeteilt werden muss und erst bei der Aufstellung beim Kunden wieder zusammengebaut wird. Die Figuren 3b, 3c, 3d und 3e sind vier weitere Beispiele von unterschiedlichen Spritzgiessmaschinen. Ein entscheidender Punkt liegt neben der modularen Bauweise in identischen Kopplungsschnittstellen 13 und 14 bzw. 15, 15' und 15'. Aus drei Baureihen können die für einen gewünschten Maschinentyp bzw. für eine bestimmte Maschinengrösse passenden Module ausgewählt werden:
→ aus einer Formschlussmodulbaureihe,
→ aus einer Spritzaggregatmodulbaureihe und
→ aus einer Antriebsmodulbaureihe.

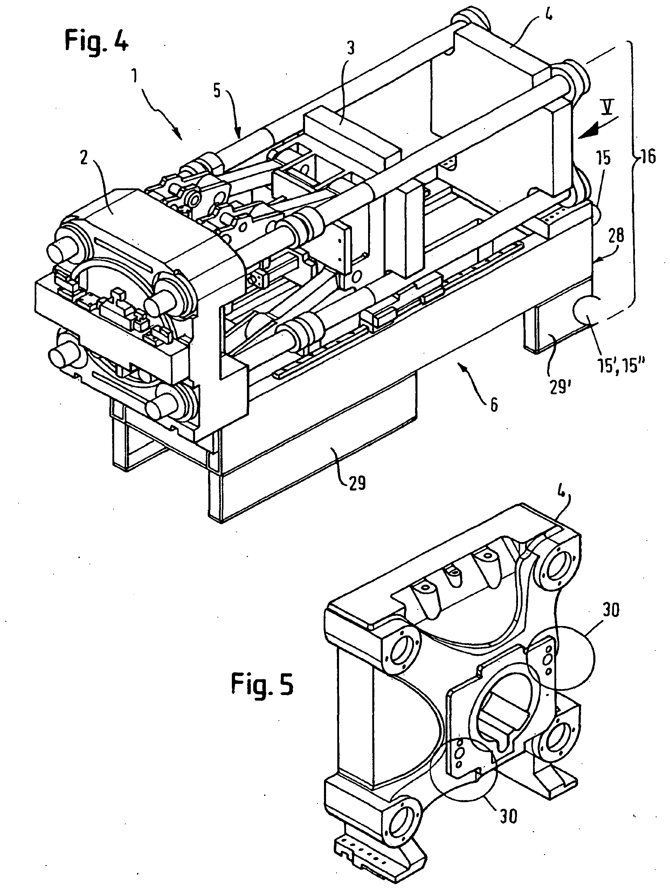

Die Figur 4 zeigt die ganze Formschlussseite als Formschlussmodul 1 mit Einschluss eines Formschlussbettes 6.
- Das Formschlussmodul 1 wird je nach Säulendistanzen und Formplatten-dimensionen optimiert aufgebaut (Spritzachsenhöhe, Ausfallöffnung, Maschinenbetthöhe, Breite).
- Schnittstellen 15 zum Aggregatunterbau 12 sind über alle Grössen definiert.
- Die genormten Kopplungsschnittstellen erlauben die Verwendung von denjenigen Verschraubungspositionen, die in der gewählten Kombination möglich sind.

Mit der Festlegung der Formschliesskraft bzw. der resultierenden Kraft des Formschlusses auf die Formaufspannplatten, wird die Einspritzachsenhöhe Hx definiert. Sich ergebende Höhenunterschiede zwischen dem Spritzaggregatmodul 16 sowie dem Antriebsmodul 17 werden durch Distanzelemente 19 ausgeglichen (Figur 1). Das Formschlussbett 6 ist als Blechkonstruktion mit zwei tragendem Obergurten 28 und Abstützungen 29, 29' ausgebildet.

Die Figur 5 zeigt die düsenseitige Formaufspannplatte 4 mit den Ankopplungs- bzw. Schnittstellen 30 zum Spritzaggregat 9. Die düsenseitige Formaufspannplatte 4 ist mit zwei Schnittstellen 30 zu den Zugstangen 27 für die Aggregatanpressung ausgestattet.

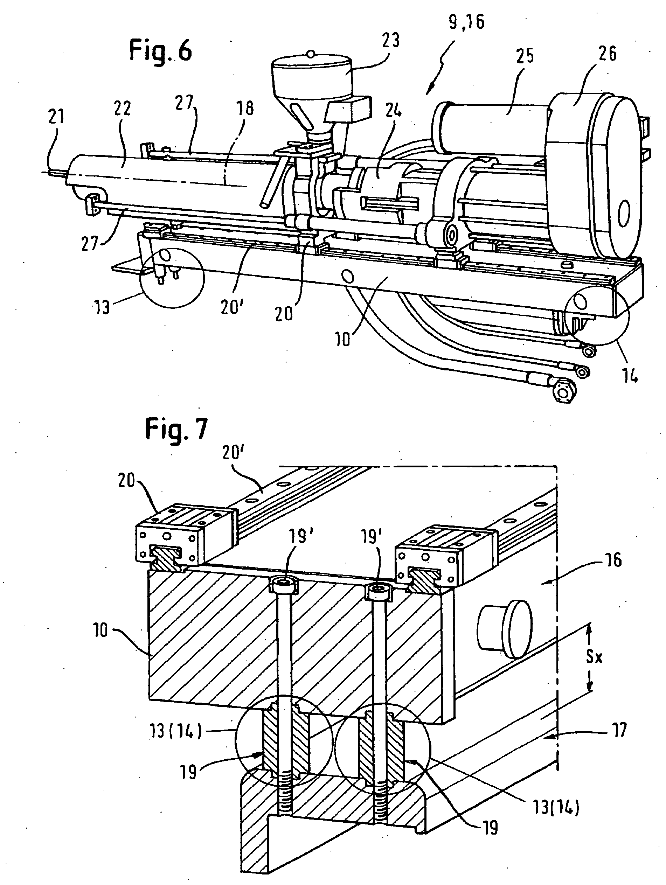

Die Figur 6 zeigt das Spritzaggregatmodul.
- Das Spritzaggregat 9 bildet mit einem Tragrohr 10 das Spritzaggregatmodul 16.
- Das Tragrohr 10 wird über zwei Kopplungsschnittstellen 13, 14 auf dem Antriebsmodul 17 abgestützt (Figur 1).
- Das Spritzaggregat 9 wird über zentrisch angeordnete Zugstangen 27 über die Schnittstellen 30 an die Formaufspannplatte 4 angepresst.
- Die Düseneinstellung wird auf an sich bekannte Weise durch Positionieren bzw. Verschieben des Aggregates 9 auf dem Tragrohr 10 vollzogen.
- Für alle Maschinen werden Plastifizierungen mit genormter Schnittstelle zum Aggregat verwendet.

Das Spritzaggregat 9 ist über Linearführungen 20 und Führungsschienen 20' verschiebbar auf dem Tragrohr 10 angeordnet und kann zur düsenseitigen Aufspannplatte 4 zu- und weggefahren werden, wobei die Düsenspitze 21 in Kontakt mit der Formeinspritzöffnung und in Distanz dazu bewegt werden kann. Das Spritzaggregat 9 besteht aus den Hauptelementen Spritzzylinder 22, Speisetrichter 23 für das Granulat, Getrieben 24 sowie Antrieben 25 mit Übertrieben 26. Unterhalb des Tragrohrs 10 sind verschiedene Leitungen für die Energiezu- und -abfuhr erkennbar. Die Leitungen sind nur schematisch dargestellt und können in jeder Art ausgebildet sein, also Ölschläuche, elektrische Verbindungen, Steuerleitungen, etc. Die neue Erfindung lässt es frei, im Hinblick auf eine rationelle Herstellung beliebige Unterbaugruppen vorzusehen.
Die Figur 7 zeigt eine Kopplungsschnittstelle 13, 14 zwischen dem Tragrohr 10 des Spritzaggregatmoduls 16 sowie dem Antriebsmodul 17. Distanzstücke 19 und Verschraubungen 19' gleichen Höhendifferenzen Sx aus.

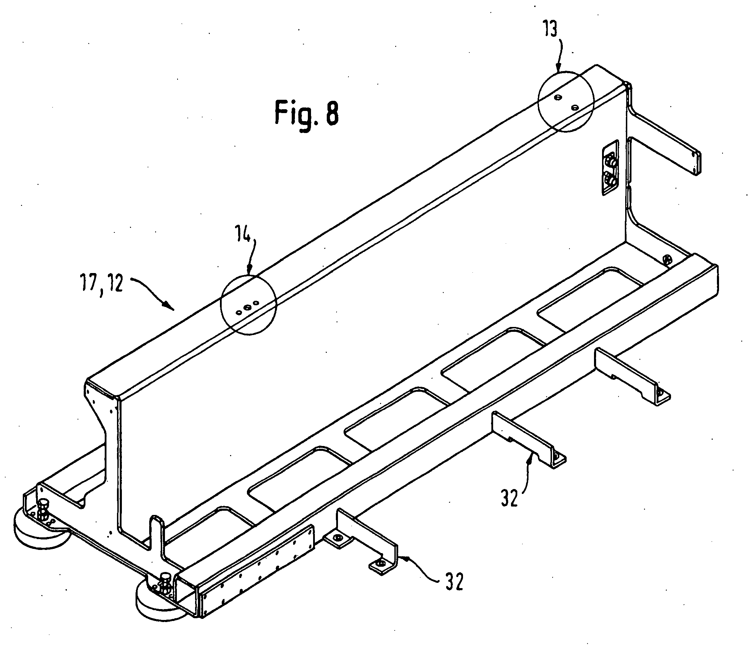

Die Figur 8 zeigt ein Antriebsmodul 17, in welchem einerseits ein Tank mit Kühler und Filter sowie die Motoren-Pumpengruppe untergebracht werden kann. Auf der gegenüberliegenden Seite können liegende Blasenspeicher 31 und ein Aggregat angeordnet werden für die Rückkühlung von Motoren und Getrieben im geschlossenen Kreislauf. Die Aufhängung 32 für einen Schaltschrank 41 ist seitlich angebracht.

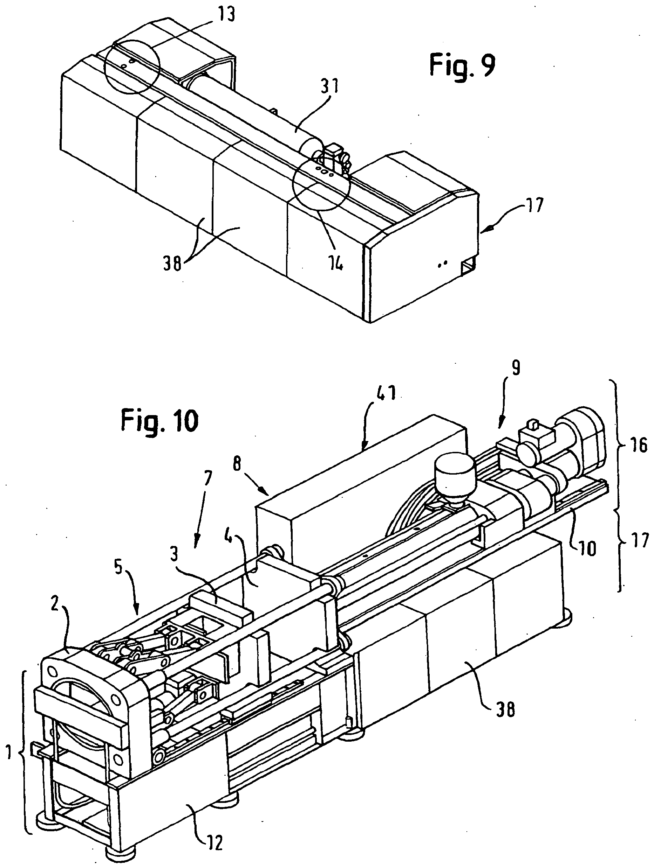

Die Figur 9 zeigt Schutzverdecke 38 des Antriebsmoduls 17. Das Antriebsmodul 17 weist einen Lärmschutz auf. Sichtbar sind ein Blasenspeicher 31 sowie die Kopplungsschnittstellen 13, 14.

Die Figur 10 zeigt die beiden Maschinenhälften entsprechend der Formschlussseite 7 sowie der Spritzaggregatseite 8 zu einer einteiligen Spritzgiessmaschine zusammengesetzt. Die Formschlussseite 7 sowie das Spritzaggregatmodul 16 sind ohne Schutzverdecke dargestellt. Rechts im Hintergrund ist der Schaltschrank 41 sichtbar.

Eine vollständige Spritzgiessmaschine weist die folgenden Schutzverdecke auf:
- ein Formschlussverdeck,
- ein Spritzaggregatverdeck sowie
- ein Spritzaggregatunterbauverdeck.

Die einzelnen Module haben unabhängige Schutzverdecke. Die einzelnen Schutzverdecke sind als einheitliche Elemente konzipiert und können aus einer Schutzverdeckbaureihe ausgewählt werden, auch hier mit dem grossen Vorteil von grösseren Stückzahlen mit der geringstmöglichen Zahl an Einzelelementen.

## Patentansprüche

1. Verfahren für Logistik, die Gestaltung sowie den Aufbau von unterschiedlich grossen Spritzgiessmaschinen auf Seiten des Maschinenherstellers, insbesondere für die Herstellung und den Transport von Spritzgiessmaschinen, wobei wenigstens die Formschlussseite (7) und die Spritzaggregatseite (8) modular mit einheitlichen Montage- bzw. Kopplungsschnittstellen (15, 15', 15") konzipiert und bei der Endmontage in Modulbauweise zu einer einteiligen Spritzgiessmaschine zusammengesetzt werden,
**dadurch gekennzeichnet, dass**
ein Formschlussmodul (1) aus einem Formschlussbett (6) und einem Formschluss (2, 3, 4, 5) vormontiert wird, und dass das Formschlussbett (6) des vormontierten Formschlussmoduls (1) mit dem als Spritzaggregatunterbau (12) ausgebildeten Antriebsmodul (17) der Spritzaggregatseite (8) über einheitliche obere und untere Montage- und Kopplungsschnittstellen (15, 15', 15") am Maschinenbett, bestehend aus dem Formschlussbett (6) und dem Spritzaggregatunterbau (12), zu einem biegestabilen Unterbau verbindbar ist bzw. verbunden wird.

2. Verfahren nach Anspruch 1,
**dadurch gekennzeichnet,**
**dass** zumindest kleinere und mittlere Maschinen nach der Endmontage einteilig gehandhabt, transportiert und beim Kunden entsprechend einteilig aufgestellt werden und die weitere Handhabung beim Kunden bzw. Anwender als untrennbare Maschine erfolgt.

3. Verfahren nach Anspruch 1 oder 2,
**dadurch gekennzeichnet,**
**dass** die Formschlussseite (7) zusammen mit einem Formschlussbett (6) als erstes Modul bzw. als Formschlussmodul (1) aus einer Formschlussbaureihe und das Spritzaggregat (9) als zweites Modul bzw. als Spritzaggregatmodul (16) aus einer Spritzaggregatbaureihe ausgewählt wird.

4. Verfahren nach einem der Ansprüche 1 bis 3,
**dadurch gekennzeichnet,**
**dass** der Aggregatunterbau (12) als Antriebsmodul (17) bzw. als drittes Modul ausgebildet und aus einer Antriebsmodulbaureihe ausgewählt wird.

5. Verfahren nach einem der Ansprüche 3 oder 4,
**dadurch gekennzeichnet,**
**dass** das Spritzaggregat (9) mit einem Tragelement (10) als zweites Modul bzw. als Spritzaggregatmodul (16) ausgebildet ist, welches über einheitliche Montage- bzw. Kopplungsschnittstellen (13, 14) mit dem Antriebsmodul (17) verbunden wird.

6. Verfahren nach Anspruch 5,
**dadurch gekennzeichnet,**
**dass** mit der Auswahl des Formschlussmoduls (1) die Spritzaxhöhe (Hx) bestimmt wird, wobei das Spritzaggregatmodul (16) mit Tragelement bzw. Tragrohr (10) mittels in der Höhe anpassbarer Distanzelemente (19) an Montage- bzw. Kopplungsschnittstellen (13, 14) mit dem Antriebsmodul (17) verbunden wird.

7. Verfahren nach einem der Anspruche 1 bis 6,
**dadurch gekennzeichnet,**
**dass** die ganze Maschine im montierten Zustand mit Hebezeug abgehoben und transportiert werden kann.

8. Verfahren nach einem der Ansprüche 1 bis 7,
**dadurch gekennzeichnet,**
**dass** das Spritzaggregat (9) über symmetrisch zur Einspritzachse angeordnete einheitliche Spritzaggregat-Schnittstellen (30) direkt mit der düsenseitigen Formaufspannplatte (4) mit dem Formschlussmodul (1) verbunden wird zur Übertragung der Anpresskraft auf das Formwerkzeug über Zugstangen (27).

9. Spritzgiessmaschine mit zweiteiligem Aufbau mit einer Formschlussseite (7) und einer Spritzaggregatseite (8), wobei die Spritzgiessmaschine für unterschiedlich grosse Spritzgiessmaschinen einen modularen Aufbau aufweist, wobei das Maschinenbett zweiteilig ausgebildet ist und genormte Montage- und Kopplungsschnittstellen (15, 15', 15") aufweist, welche die Formschlussseite (7) und die Spritzaggregatseite (8) verbinden,
**dadurch gekennzeichnet, dass**
ein aus einem Formschlussbett (6) und einem Formschluss (2, 3, 4, 5) vormontiertes Formschlussmodul (1) vorgesehen ist, und dass das Fomschlussbett (6) des vormontierten Formschlussmoduls (1) mit dem als Spritzaggregatunterbau (12) ausgebildeten Antriebsmodul (17) der Spritzaggregatseite (8) über einheitliche obere und untere Montage- und Kopplungsschnittstellen (15, 15', 15") am Maschinenbett, bestehend aus dem Formschlussbett (6) und dem Spritzaggregatunterbau (12), zu einem biegestabilen Unterbau verbindbar ist bzw. verbunden wird.

10. Spritzgiessmaschine nach Anspruch 9,
**dadurch gekennzeichnet,**
**dass** die Module der Spritzgiessmaschine in der Endmontage beim Hersteller zu einer einteiligen Maschine zusammenbaubar sind.

11. Spritzgiessmaschine nach Anspruch 9 oder 10,
**dadurch gekennzeichnet,**
**dass** die Spritzgiessmaschine wenigstens
ein Formschlussmodul (1),
ein Spritzaggregatmodul (16) sowie
ein Antriebsmodul (17) aufweist.

12. Spritzgiessmaschine nach einem der Ansprüche 9 bis 11,
**dadurch gekennzeichnet,**
**dass** die Montage- und Kopplungsschnittstellen (15, 15', 15") als genormte Schnittstellen ausgebildet sind, derart, dass das Spritzaggregatteil, bestehend aus dem Aggregatmodul (16) sowie dem Antriebsmodul (17) und das Formschlussmodul (1) aus einer jeweiligen Baureihe frei auswählbar und zusammenstellbar sind.

13. Spritzgiessmaschine nach einem der Ansprüche 9 bis 12,
**dadurch gekennzeichnet,**
**dass** der Aggregatunterbau (12) mit den Antrieben ein Antriebsmodul (17) bildet, welches über entsprechende Handlings- bzw. Montageschnittstellen (13, 14) mit dem Spritzaggregatmodul (16) einerseits sowie dem Formschlussmodul (1) bzw. dem Formschlussbett (6) andererseits verbindbar ist.

14. Spritzgiessmaschine nach einem der Ansprüche 9 bis 13,
**dadurch gekennzeichnet,**
**dass** im Antriebsmodul (17) ein Ölspeicher (31) sowie ein Pumpenantrieb, ferner Kühler und Filter angeordnet sind.

15. Spritzgiessmaschine nach einem der Anspruche 9 bis 14,
**dadurch gekennzeichnet,**
**dass** der Schaltschrank (41) am Antriebsmodul (17) angeordnet ist.

16. Spritzgiessmaschine nach einem der Ansprüche 9 bis 15,
**dadurch gekennzeichnet,**
**dass** die einzelnen Module unabhängige, genormte Schutzverdecke aufweisen,
• ein Formschlussverdeck (36),
• ein Spritzaggregatverdeck (37),
• ein Spritzaggregatunterbauverdeck (38).

17. Spritzgiessmaschine nach einem der Ansprüche 9 bis 16,
**dadurch gekennzeichnet,**
**dass** Spritzgiessmaschinen grösser als 400 t Schliesskraft zwei- oder mehrstückig transportierbar sind.

18. Spritzgiessmaschine nach Anspruch 17,
**dadurch gekennzeichnet,**
**dass** der Zusammenbau der Komponenten der Spritzgiessmaschinen grösser als 400 t Schliesskraft am Produktionsstandort beim Kunden erfolgt, vorzugsweise mit reduzierter Anzahl Verschraubungen des Formschlussbettes (6) mit dem Antriebsmodul (17).

19. Spritzgiessmaschine nach Anspruch 17 oder 18,
**dadurch gekennzeichnet,**
**dass** zwischen der Formschlussseite (7) sowie der Spritzaggregatseite (8) elektrische / elektronische und hydraulische Kopplungs- bzw. Schnittstellen angeordnet sind.

20. Spritzgiessmaschine nach einem der Ansprüche 9 bis 19,
**dadurch gekennzeichnet,**
**dass** die Spritzaggregathöhe Hx genormt wird, wobei eine Höhendifferenz Sx zwischen dem Tragelement bzw. Tragrohr (10) des Spritzaggregates (9) sowie dem Antriebsmodul (17) durch Distanzstücke (19) ausgeglichen wird.

## Claims

1. A method for logistics, the design and the construction of injection moulding machines having different sizes at the machine manufacturer, in particular for the manufacture and transport of injection moulding machines,
wherein at least the mould clamping side (7) and the injection unit side (8) are designed in modular form with standardized assembly- or respectively coupling interfaces (15, 15', 15") and are put together during final assembly in modular construction to a one-piece injection moulding machine,
**characterized in that**
a mould clamping module (1) is pre-assembled from a mould clamping bed (6) and from a mould closure (2,3,4,5), and that the mould clamping bed (6) of the pre-assembled mould clamping module (1) can be connected or is connected with the drive module (17), configured as injection unit substructure (12), of the injection unit side (8) by way of standardized upper and lower assembly and coupling interfaces (15, 15', 15") at the machine bed, consisting of the mould clamping bed (6) and the injection unit substructure (12), to a bending-resistant substructure.

2. The method according to Claim 1, **characterized in that** at least smaller and medium-sized machines, after final assembly, are handled in one piece, transported and installed at the customer in one piece accordingly, and the additional handling at the customer or respectively user occurs as an inseparable machine.

3. The method according to Claim 1 or 2, **characterized in that** the mould clamping side (7) together with a mould clamping bed (6) is selected as a first module or respectively as a mould clamping module (1) from a range of mould clamping products, and the injection unit (9) is selected as a second module or respectively as an injection unit module (16) from a range of injection unit products.

4. The method according to one of Claims 1 to 3, **characterized in that** the unit substructure (12) is configured as a drive module (17) or respectively as a third module and is selected from a range of drive modules.

5. The method according to one of Claims 3 or 4, **characterized in that** the injection unit (9) with a support element (10) is configured as a second module or respectively as an injection unit module (16), which is connected via standardized assembly- or respectively coupling interfaces (13, 14) with the drive module (17).

6. The method according to Claim 5, **characterized in that** the injection axis height (Hx) is determined with the selection of the mould clamping module (1), wherein the injection unit module (16) with support element or respectively support tube (10) is connected at assembly- or respectively coupling interfaces (13, 14) with the drive for module (17) by means of height-adjustable spacer elements (19).

7. The method according to one of Claims 1 to 6, **characterized in that** the entire machine can be lifted and transported in the assembled state with a hoist.

8. The method according to one of Claims 1 to 7, **characterized in that** the injection unit (9) is directly connected with the nozzle-side platen (4) with the mould clamping module (1) by way of standardized injection unit interfaces (30) which are arranged symmetrically to the injection axis, for transferring the contact pressing force to the mould via tie rods (27).

9. An injection moulding machine having a two-part structure with a mould clamping side (7) and an injection unit side (8), wherein the injection moulding machine has a modular structure for injection moulding machines of different sizes, wherein the machine bed is constructed in two parts and has standardized assembly- and coupling interfaces (15, 15', 15"), which connect the mould clamping side (7) and the injection unit side (8), **characterized in that** a mould clamping module (1), pre-assembled from a mould clamping bed (6) and from a mould closure (2,3,4,5) is provided, and that the mould clamping bed (6) of the pre-assembled mould clamping module (1) can be connected or is connected with the drive module (17), configured as injection unit substructure (12), of the injection unit side (8) by way of standardized upper and lower assembly and coupling interfaces (15, 15', 15") at the machine bed, consisting of the mould clamping bed (6) and of the injection unit substructure (12), to a bending-resistant substructure.

10. The injection moulding machine according to Claim 9, **characterized in that** the modules of the injection moulding machine can be assembled to a one-piece machine in the final assembly at the manufacturer.

11. The injection moulding machine according to Claim 9 or 10,
**characterized in that**
the injection moulding machine has at least
a mould clamping module (1),
an injection unit module (16), and
a drive module (17).

12. The injection moulding machine according to one of Claims 9 to 11, **characterized in that** the assembly- and coupling interfaces (15, 15', 15") are configured as standardized interfaces, such that the injection unit section, consisting of the unit module (16) and the drive module (17), and the mould clamping module (1) can be freely selected and combined from a respective range of products.

13. The injection moulding machine according to one of Claims 9 to 12, **characterized in that** the unit substructure (12) together with the drives forms a drive module (17), which can be connected by way of corresponding handling- or respectively assembly interfaces (13, 14) with, on the one hand, the injection unit module (16) and, on the other hand, with the mould clamping module (1) or respectively the mould clamping bed (6).

14. The injection moulding machine according to one of Claims 9 to 13, **characterized in that** an oil reservoir (31) and a pump drive, in addition a cooler and a filter are arranged in the drive module (17).

15. The injection moulding machine according to one of Claims 9 to 14, **characterized in that** the control box (41) is arranged on the drive module (17).

16. The injection moulding machine according to one of Claims 9 to 15,
**characterized in that**
the individual modules have independent standardized protective covers,
▪ a mould clamping cover (36),
▪ an injection unit cover (37),
▪ an injection unit substructure cover (38).

17. The injection moulding machine according to one of Claims 9 to 16, **characterized in that** injection moulding machines having a clamping force of greater than 400 t can be transported in two or more pieces.

18. The injection moulding machine according to Claim 17, **characterized in that** the assembly of the components of the injection moulding machines having a clamping force greater than 400 t occurs on the production site at the customer, preferably with a reduced number of screw connections of the mould clamping bed (6) with the drive module (17).

19. The injection moulding machine according to Claim 17 or 18, **characterized in that** electrical/electronic and hydraulic coupling sites or respectively interfaces are arranged between the mould clamping side (7) and the injection unit side (8).

20. The injection moulding machine according to one of Claims 9 to 19, **characterized in that** the injection unit height Hx is standardized, wherein a height difference Sx between the support element or respectively support tube (10) of the injection unit (9) and the drive module (17) is compensated by spacers (19).

## Revendications

1. Procédé pour la logistique, la mise en forme et le montage de machines de moulage par injection de différentes tailles par le fabricant de la machine, en particulier pour la fabrication et le transport de machines de moulage par injection, dans lequel au moins le côté fermeture de moule (7) et le côté groupe d'injection (8) sont conçus de façon modulaire avec des interfaces de montage, respectivement de couplage (15, 15', 15") homogènes, et assemblés en une machine de moulage par injection d'un seul tenant dans une construction modulaire au montage final, **caractérisé en ce qu'**un module de fermeture de moule (1) est pré-monté à partir d'un socle de fermeture de moule (6) et d'une fermeture de moule (2, 3, 4, 5) et que le socle de fermeture de moule (6) du module de fermeture de moule (1) pré-monté est relié ou peut être relié au module d'entraînement (17) du côté groupe d'injection (8) conçu en tant que bâti de groupe (12), en un bâti stable à la flexion par des interfaces de montage, respectivement de couplage (15, 15', 15") supérieure et inférieure homogènes sur le socle de machine, se composant du socle de fermeture de moule (6) et du bâti du groupe (12).

2. Procédé selon la revendication 1, **caractérisé en ce qu'**au moins des petites et moyennes machines sont manutentionnées, transportées d'un seul tenant après le montage final et montées d'un seul tenant de manière correspondante chez le client, et que la manutention ultérieure s'effectue en tant que machine inséparable chez le client, respectivement, l'utilisateur.

3. Procédé selon la revendication 1 ou 2, **caractérisé en ce que** le côté fermeture de moule (7) conjointement avec un socle de fermeture de moule (6) est sélectionné en tant que premier module, respectivement, module de fermeture de moule (1) parmi une gamme de fermetures de moule et que le groupe d'injection (9) est sélectionné en tant que second module, respectivement, en tant que module de groupe d'injection (16) parmi une gamme de groupes d'injection.

4. Procédé selon l'une des revendications 1 à 3, **caractérisé en ce que** le bâti du groupe (12) est conçu en tant que module d'entraînement (17), respectivement, en tant que troisième module et est sélectionné parmi une gamme de modules d'entraînement.

5. Procédé selon la revendication 3 ou 4, **caractérisé en ce que** le groupe d'injection (9) est conçu avec un élément porteur (10) en tant que second module, respectivement en tant que module de groupe d'injection (16), lequel est relié au module d'entraînement (17) par des interfaces de montage, respectivement de couplage (13, 14) homogènes.

6. Procédé selon la revendication 5, **caractérisé en ce que** la hauteur de l'axe d'injection (Hx) est déterminée avec la sélection du module de fermeture de moule (1), sachant que le module de groupe d'injection (16) avec l'élément porteur, respectivement, le tube porteur (10), est relié au module d'entraînement (17) au moyen d'écarteurs (19) adaptables en hauteur sur des interfaces de montage, respectivement de couplage (13, 14).

7. Procédé selon l'une des revendications 1 à 6, **caractérisé en ce que** la totalité de la machine peut être soulevée avec un outil de levage et transportée dans l'état monté.

8. Procédé selon l'une des revendications 1 à 7, **caractérisé en ce que** le groupe d'injection (9) est relié au module de fermeture de moule (1) directement par le plateau de serrage de moule (4) côté buses via des interfaces de groupe d'injection (30) homogènes disposées symétriquement par rapport à l'axe d'injection, pour transmettre la force de compression sur l'outil de moulage par des barres de traction (27) .

9. Machine de moulage par injection avec montage en deux parties comprenant un côté fermeture de moule (7) et un côté groupe d'injection (8),
sachant que la machine de moulage par injection présente un montage modulaire pour des machines de moulage par injection de différentes tailles, sachant que le socle de la machine est en deux parties et présente des interfaces de montage et de couplage (15, 15', 15") normalisées, qui relient le côté fermeture de moule (7) au côté groupe d'injection (8), **caractérisé en ce qu'**un module de fermeture de moule (1) pré-monté à partir d'un socle de fermeture de moule (6) et d'une fermeture de moule (2, 3, 4, 5) est prévu et que le socle de fermeture de moule (6) du module de fermeture de moule (1) pré-monté est relié ou peut être relié au module d'entraînement (17) du côté groupe d'injection (8) conçu en tant que bâti de groupe (12), en un bâti stable à la flexion par des interfaces de montage, respectivement de couplage (15, 15', 15") supérieure et inférieure homogènes sur le socle de machine, se composant du socle de fermeture de moule (6) et du bâti du groupe (12).

10. Machine de moulage par injection selon la revendication 9, **caractérisée en ce que** les modules de la machine de moulage par injection peuvent être assemblés en une machine d'un seul tenant en fin de montage chez le fabricant.

11. Machine de moulage par injection selon la revendication 9 ou 10, **caractérisée en ce que** la machine de moulage par injection présente au moins un module de fermeture de moule (1), un module de groupe d'injection (16) ainsi qu'un module d'entraînement (17).

12. Machine de moulage par injection selon l'une des revendications 9 à 11, **caractérisée en ce que** les interfaces de montage, respectivement de couplage (15, 15', 15") sont conçues en tant qu'interfaces normalisées, de telle sorte que la partie de groupe d'injection, composée du module de groupe (16) et du module d'entraînement (17), et le module de fermeture de moule (1) peuvent être sélectionnés librement et assemblés parmi une gamme respective.

13. Machine de moulage par injection selon l'une des revendications 9 à 12, **caractérisée en ce que** le bâti de groupe (12) forme un module d'entraînement (17) avec les entraînements, lequel peut être relié d'une part au module de groupe d'injection (16) via des interfaces de manutention, respectivement de montage (13, 14) correspondantes et d'autre part au module de fermeture de moule (1), respectivement, au socle de fermeture de moule (6).

14. Machine de moulage par injection selon l'une des revendications 9 à 13, **caractérisée en ce qu'**un réservoir d'huile (31) ainsi qu'un entraînement de pompe, et en outre des réfrigérants et des filtres sont disposés dans le module d'entraînement (17).

15. Machine de moulage par injection selon l'une des revendications 9 à 14, **caractérisée en ce que** le boîtier électrique (41) est disposé sur le module d'entraînement (17).

16. Machine de moulage par injection selon l'une des revendications 9 à 15, **caractérisée en ce que** les différents modules présentent des capots de protection normalisés indépendants,
• un capot de fermeture de moule (36),
• un capot de groupe d'injection (37),
• un capot de bâti de groupe d'injection (38).

17. Machine de moulage par injection selon l'une des revendications 9 à 16, **caractérisée en ce que** des machines de moulage par injection supérieures à une force de fermeture de 400 t peuvent être transportées en deux ou plusieurs pièces.

18. Machine de moulage par injection selon la revendication 17, **caractérisée en ce que** l'assemblage des composantes des machines de moulage par injection supérieures à une force de fermeture de 400 t a lieu sur le lieu de production du client, de préférence avec un nombre réduit de vissages du socle de fermeture de moule (6) avec le module d'entraînement (17).

19. Machine de moulage par injection selon la revendication 17 ou 18, **caractérisée en ce que** des interfaces de couplage électriques / électroniques et hydrauliques sont disposées entre le côté de fermeture de moule (7) et le côté de groupe d'injection (8).

20. Machine de moulage par injection selon l'une des revendications 9 à 19, **caractérisée en ce que** la hauteur du groupe d'injection Hx est normalisée, sachant qu'une différence de hauteur Sx entre l'élément porteur, respectivement, le tube porteur (10) du groupe d'injection (9) et le module d'entraînement (17) est compensée par des écarteurs (19).
